Europäisches Patentamt

European Patent Office

Office européen des brevets

(11) Publication number: **0 387 227**
**A2**

# EUROPEAN PATENT APPLICATION

(21) Application number: 90850096.0

(22) Date of filing: 06.03.90

(51) Int. Cl.5· **G02B 23/12, G02B 17/08**

(30) Priority: 07.03.89 SE 8900779

(43) Date of publication of application:
**12.09.90 Bulletin 90/37**

(84) Designated Contracting States:
**BE CH DE FR GB IT LI NL SE**

(71) Applicant: **AB BOFORS**

**S-691 80 Bofors(SE)**

(72) Inventor: **Söderlindh, Michel**
**Radmansgatan 19**
**S-114 25 Stockholm(SE)**
Inventor: **Holmgren, Olle**
**Burspraksvagen 12**
**S-121 40 Johanneshov(SE)**

(74) Representative: **Olsson, Gunnar**
**Nobel Corporate Services Patents and**
**Trademarks**
**S-691 84 Karlskoga(SE)**

(54) **Night telesope.**

(57) The invention relates to a night sight which comprises a large-aperture lens (1), a light-amplifying tube (2) for amplifying the image which is projected by the lens and an ocular (3) through which an observer can view the amplified image. An IR sight is arranged in connection with the large-aperture night sight lens. the IR sight's lens (5) being preferably situated in a central obstruction (4) in the night sight lens, and the IR light is converted to visible light via a detector/luminescent diode array (6, 7) after which the image produced in the IR sight is reflected into the night sight lens (1) and is amplified by the light-amplifying tube (2). By combining the two night systems, a target which is "invisible" to the light-amplifying sight alone can be located with the aid of the IR addition. Due to the fact that the luminescent diode signals are amplified via the light-amplifying tube, these signals do not need to be strong. The equipment can be made light and uncomplicated.

## Night sight

The present invention relates to a night sight of the type which comprises a large-aperture lens, a light-amplifying tube for amplifying the image which is projected by the lens and an ocular through which an observer can view the amplified image.

For observation, particularly of military targets, it is already known to use night sights with light-amplifying tubes which amplify the image which is projected on the large-aperture sight lens. Such a night sight has a limitation in respect of the detection of targets against a dark background and, on the whole, in respect of detecting targets at light values of < 1 mlux (night with starry sky). However, forest sections, open fields, roads, hills and the horizon line can almost always be distinguished.

It is also already known to use IR sights where the received IR light is converted to visible light via a luminescent diode array. With the aid of such a sight, even "invisible" targets can be located. However, the IR sights are very expensive today and are technically quite complicated.

The object of this invention is to produce a night sight which combines the advantages of the two systems at the same time and eliminates many of their disadvantages. The invention is mainly characterized in that an IR sight is arranged in connection with the large-aperture night sight lens, that elements are arranged in the IR sight for converting the IR light to visible light, and in that the visible image produced in the IR sight is arranged to be reflected in the night sight lens and amplified by the light-amplifying tube.

The elements in the IR sight for converting the IR light to visible light are preferably made up of a detector array, a so-called "staring array" in which the signals from this array are converted to visible light via a luminescent diode array.

The advantages of such a combination are that the conversion of the IR signals to visible light requires very little power. The luminescent diode signals do not need to be strong since they are amplified approximately 10,000 times via the light-amplifying tube. The equipment can be made light and uncomplicated.

The invention will be described in greater detail below in connection with the attached drawing, in which Figure 1 shows a first embodiment of the night sight where the mirror lens of the sight has a central obstruction in which the lens of the IR sight is mounted, Figure 2 shows an alternative embodiment in which the lens of the IR sight is mounted to the side of the mirror lens, and Figure 3 shows an example of an image which appears in the ocular of the sight and where a target, which is "invisible" to the light-amplifier sight alone, has been located with the aid of the IR addition.

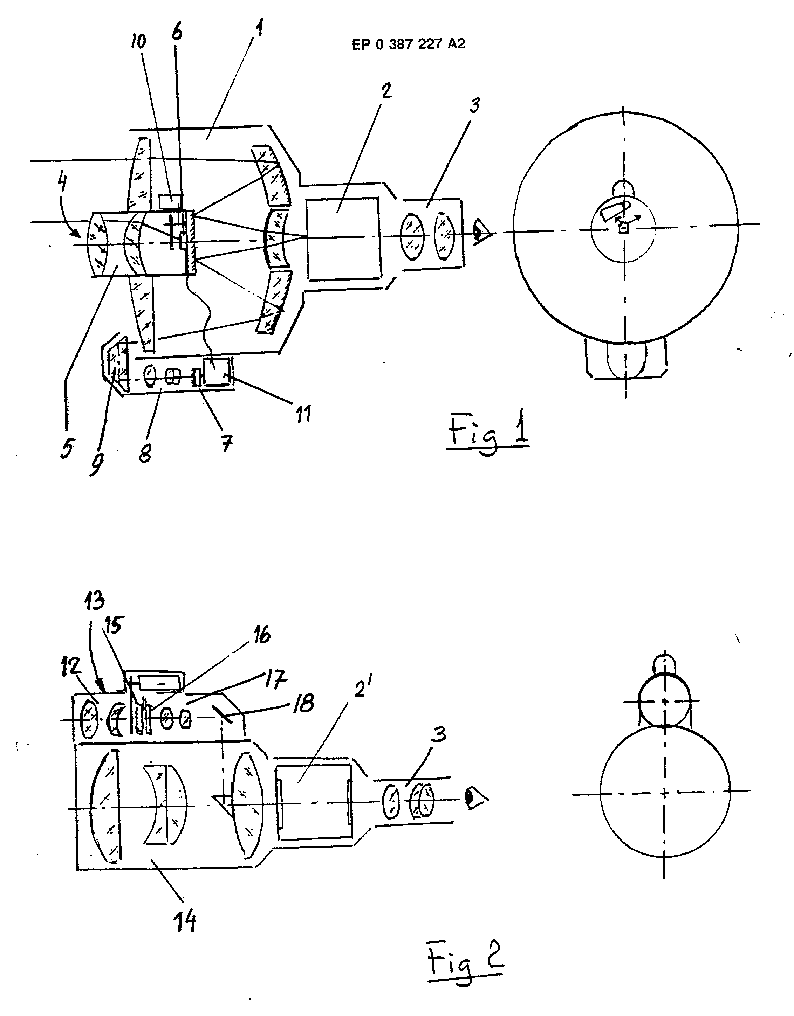

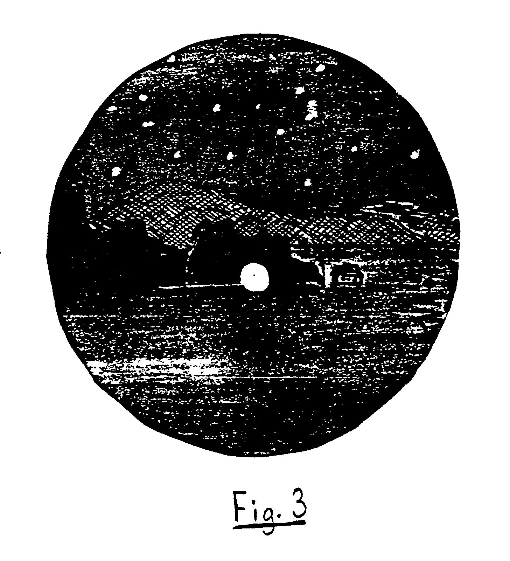

The instrument shown in Figure 1 comprises a large-aperture mirror lens 1 of the so-called catadioptric type with a field of view of 10-16 degrees. The mirror lens 1 projects in a known manner an image of the object, for example a military target, onto the photo-cathode of a light-amplifying tube 2. The image on the anode side of the light-amplifying tube is viewed by the observer via a single ocular 3. The mirror lens 1 has a central obstruction 4 in which an IR lens 5 is mounted which has a small field of view of approximately 3 degrees. The IR lens 5 projects an IR image on an IR detector 6 which is also situated in the obstruction 4 of the mirror lens and consists of a pyroelectric uncooled so-called staring array with 16x16 detector elements. The signals from this array are conducted to an addition situated under the mirror lens and are converted to visible light via a luminescent diode array 7 which also consists of 16x16 elements. The luminescent diode array is reflected via a single lens 8 and an optical bridge 9 into the lens of the night sight and the luminescent diode signals are amplified by the light-amplifying tube 2. The image which appears to the observer in the ocular thus consists of an image produced by the normal lens of the night sight and a superimposed "IR blip" produced by the IR lens, see Figure 3. In this image, sections of forest, open fields, roads, hills and horizon line appear through the normal lens of the night sight. Superimposed, a target also appears against the dark background thanks to the IR lens. It is thus the combination of the two systems which gives the invention its performance. The IR lens can have a small field of view and the IR detector does not need to have any high resolution. The conversion of the IR signals to visible light requires very little power. The luminescent diode signals do not need to be strong since they are amplified approximately 10,000 times via the light-amplifier. As a result, the equipment can be made light and uncomplicated. For the rest, the IR sight can be constructed of conventional parts like the chopper 10 and the signal processing electronics 11 and therefore does not need to be described in greater detail.

Figure 2 shows an alternative embodiment of the invention where the IR lens 12 is placed in a separate part 13 to the side of the sight lens which, in this case, comprises a lens objective 14. Analogously to the embodiment in Figure 1, the IR signals are converted to visible light via IR detector/luminescent diode array 15 and 16, respectively. The luminescent diode array is reflected via a single lens 17 and a mirror 18 into the lens objective 14 and is amplified in the light-amplifying tube 2'.

## Claims

1. Night sight comprising a large-aperture lens, a light-amplifying tube for amplifying the image which is projected by the lens and an ocular through which an observer can view the amplified image, characterized in that an IR sight is arranged in connection with the large-aperture night sight lens, in that elements are arranged in the IR sight for converting the IR light to visible light, and the image produced in the IR sight is arranged to be reflected into the night sight lens (1, 14) and amplified by the light-amplifying tube (2, 2').

2. Night sight according to Claim 1, characterized in that the IR sight comprises a lens (5) with a small field of view, a detector array (6) and a luminescent diode array (7) for converting the detector signal to visible light.

3. Night sight according to Claim 2, characterized in that the large-aperture night sight lens (1) is of the catadioptric type with a central obstruction (4) in which the lens (5) of the IR sight and detector array (6) are mounted.

4. Night sight according to Claim 2, characterized in that the large-aperture night sight lens comprises a lens objective (14), the IR sight being made up of a separate part where the IR lens (5) is placed to the side of the lens objective (14).

Fig 1

Fig 2

Fig. 3